# EUROPEAN PATENT SPECIFICATION

(11) **EP 1 247 480 B1**
(45) Date of publication and mention of the grant of the patent: **13.07.2005**
(21) Application number: 01107800.3
(22) Date of filing: 05.04.2001
(51) Int. Cl.: A47J 31/40, A47J 31/06

(54) **Coffee extraction system**
Kaffeeextrahierungssystem
Système pour extraire du café

(43) Date of publication of application: 09.10.2002
(73) Proprietor: Mövenpick - Holding, 6330 Cham (CH)
(72) Inventor: Henck, Martin, 4800 Zofingen (CH); Mariller, Alain, 1860 Aigle (CH)
(74) Representative: Blum, Rudolf Emil Ernst

(56) References cited:
- EP-A- 0 622 039
- EP-A- 0 726 053
- EP-A- 1 016 364
- US-A- 2 968 560
- US-A- 5 649 472
- US-A- 5 897 899

## Description

The invention relates to a coffee extraction system according to claim 1 and to a coffee extraction method according to claim 14.

It is known by example from EP-B-0 717 603, to enclose a dose of ground coffee in a water permeable container and to extract coffee therefrom in an extraction chamber by pressing hot water through the container. The water permeable container is usually made of coffee filter paper and therefore allows water to enter the container through the paper on one side and provides the coffee filtering means by itself on the other side.

On the other hand different systems are known where ground coffee is enclosed in a closed, completely water impermeable container which has to be pierced on one side by water injection means and which bursts open on the other side by the pressure of the water in the container which acts on a container membrane. This bursting may be promoted by a filter plate having cone shaped elements resulting in local stress areas on the membrane stressed and bursted by the water pressure; such a system is for example known from EP-B-0 604 615. By US-A-2 899 886 and US-A-2 968 560 it is known to pierce water impermeable containers upon closing the extraction chamber.

The object of the present invention is to improve on the coffee extract quality of the first kind of systems with water permeable containers.

This object is met by the features of claim 1.

Surprisingly, it has been found that a piercing of the water permeable container in the extraction chamber - which seems to be in contradiction to this system since the container is water permeable per se - and the providing of extraction channels gives a better defined extraction at higher pressures which results in a better perceived coffee extract quality. The claimed coffee machine of the system is provided with an extraction chamber and pierces the container in this chamber.

Preferably the extraction elements are provided on the surface on the chamber wall, so that upon closing of the chamber to enclose the container is automatically pierced and the channels are provided. In an alternative embodiment, the extraction elements can be introduced into the chamber separately and are thus designed to be introduced movably through the chamber wall or walls.

According to a preferred embodiment of the invention the water and coffee extract is prevented from leaving the extraction chamber until a predetermined pressure has been reached in this chamber. This avoids a mere percolating of the water through the container and puts the coffee under the sought for water pressure for a certain, well-defined time, which has heretofore not been the case.

The object is further met by the extraction method of claim 14.

In the following preferred embodiments are described as examples with reference to the drawings wherein
Figures 1a to 1d show a general schematic overview on the extraction steps;
Figure 2 shows a sectional view of a part of the extraction chamber and the container;
Figure 3 shows a general overview on the hydraulic system of a coffee machine according to the invention;
Figure 4 shows a perspective view of an inner surface of the extraction chamber; and
Figure 5 shows more detailed a sectional view through the one extraction chamber part and the driving pistons for closing the chamber and blocking fluid flow therethrough.

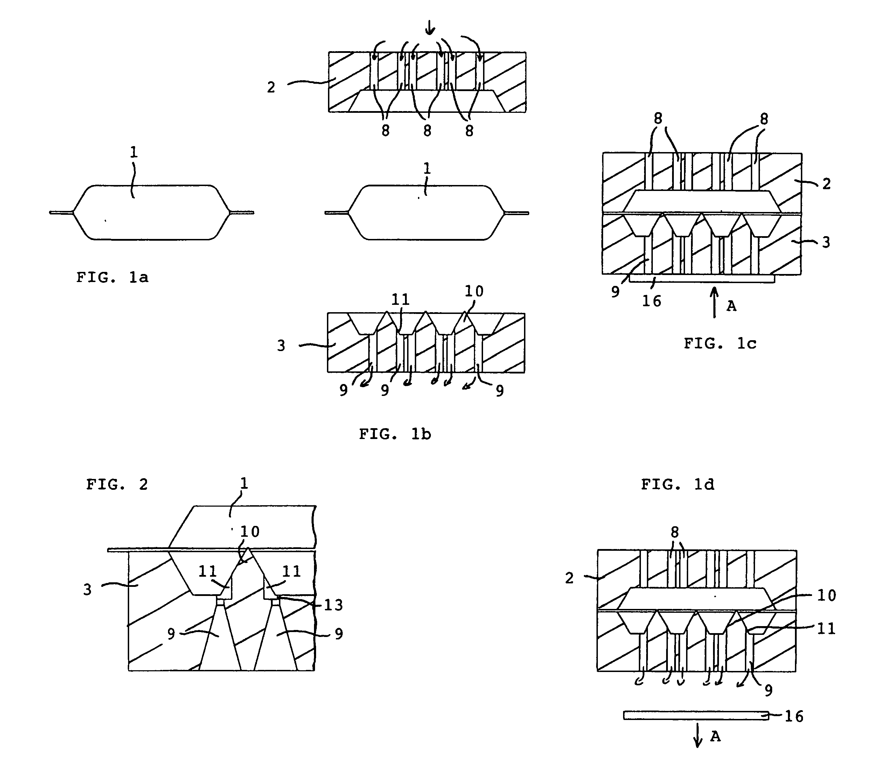

Figures 1a to 1d show in a very general way the extraction of coffee according to the aspects of the invention. Figure 1a shows a container 1 which may be a water permeable container according to EP-B-0 717 603. This has to be understood as an example only, all kinds and shapes of water permeable containers are possible, for example a cylindrical shape with permeable upper and lower faces or a cubic shape. The water permeable parts of the container are usually made of filter paper or the like and the container contains a dose of ground coffee, for example in an amount sufficient for preparing one cup of coffee.

For producing the coffee extract from the ground coffee contained in the container 1, it is known, and is the case in the present invention as well, to insert this container into an extraction chamber 5, which can be done manually or by automatic feeding means depending on the actual type of coffee machine. For insertion of the container 1 the extraction chamber is in an open state as shown in Figure 1b. It is known to then close the extraction chamber which is adapted in its shape, to the type of container used, and specifically to its shape so that the container is enclosed by the extraction chamber. Enclosed in the context of the present invention means that the container is in a closed chamber more or less held tightly therein. It is possible that flanges or a flange 4 of the container are thereby pinched between two parts 2, 3 forming together the extraction body with the extraction chamber 5. The coffee extract is then produced by pressing hot water through inlet openings 8 of the part 2 which water flows through the filter paper of the container 1, the ground coffee 7 and out of the chamber 5 through outlet openings 9 in the other part 3 which is provided with a multitude of openings 9 as in a filter plate, although the filtering is mainly done by the filter paper of the container resting against the surface 14 of the part 3 forming the inner extraction chamber wall. The coffee extract flowing out of outlets 9 is collected in a conduit, which finally ends above the cup. Water flows in this known way as long as the pump of the coffee machine is working and the pressure generated in the container depends mainly from the compactness of the coffee powder in the container and the number and diameter of the openings 9.

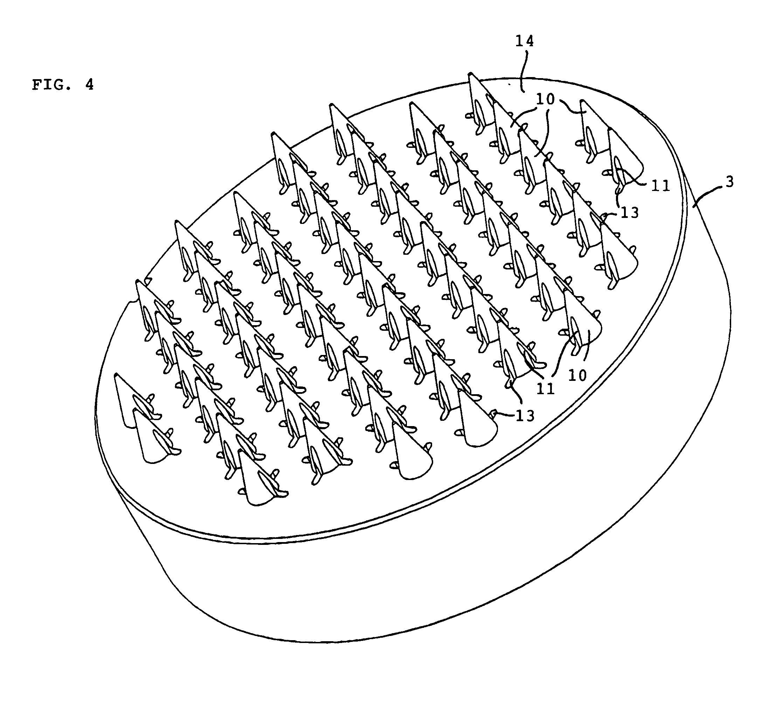

According to one aspect of the invention and still with reference to Figs. 1a to 1d, there are provided elements 10 which enter into the container being in the extraction chamber and which provide extraction channels 11 reaching into the container (these channels are better visible in Figs. 2 and 4). Accordingly, the container is pierced by the elements 10, which makes it preferable to provide them with a conical or pyramidal shape or other shape allowing a piercing of the container wall without tearing it too much, so that the elements 10 are inserted in the container 1 without destroying the filter paper of the permeable container except for the piercing area.

The elements 10 are shown in the examples as being solid with the part 3 and thus with the wall of the extraction chamber 5. This is a preferred embodiment which lead automatically to the piercing of the container as the parts 2, 3 move together to close the chamber 5. It is, however, possible as well to have separate elements 10 which are moved into the chamber 5 after the chamber has been closed, for example needle-like shaped or conical elements 10 that are inserted into the chamber 5 and thus into the container through openings in part 3 which may or may not be the outlet openings 9 at the same time. These outlet openings 9 may in this case be provided within the elements 10 as well. The piercing elements move in any case into the space of the chamber provided for the container and thus actively pierce this container before water is fed therein.

The water is pressed through the openings 8 of part 2 and enters the container 1 through its permeable paper wall. The coffee extract on the other hand leaves the container 1 mainly by channels 11 being in connection with outlet openings 9. Figure 2 shows an enlarged part sectional view of part 3 and an element 10 with channel 11. This channel 11 may open directly in an outlet opening 9 or there may be provided as shown in Figures 2 and 4 channel sections 13 that are grooves in the surface 14 of the chamber wall or part 3, respectively. The outlet openings 9 may preferably be shaped as a nozzle as shown in Figure 2 or more generally as having a smaller diameter section along their length or may be straight openings.

By providing defined channels 11 and preferably 13, a more even and predictable flow of water is resulting and the pressure generated in the chamber 5 and container 1, respectively, is greater and better defined as in the prior art coffee machines, extraction systems and methods, which results in a better and from dose to dose more uniform coffee extract quality.

The nozzle shaped outlet openings 9 enhance this effect by making it possible to make the smallest opening diameters smaller than straight openings without excessive danger of clogging of the openings.

Figure 4, which just shows the extraction surface 14 of the part 3 without the flange thereof for forming a closed chamber 5, shows again elements 10 with channels 11 and preferred grooves 13. Of course, the number of elements 10 and the number of channels 11 and grooves 14 and their shapes are only to be understood as an example.

With reference to Figure 1c which shows the closed extraction state of chamber 5, which would allow extraction as explained above, a preferred embodiment of the present invention is explained. As can be seen in Figure 1c, the outlet openings 9 are blocked by a blocking element 16 which prevents flow of the water through the extraction chamber 5 and container 1. Since the pump is working and water can enter the chamber 5 through openings 8, the pressure in the chamber is raising depending on the power of the pump. A force A is acting on the blocking element 16, which counteracts the force of the coffee extract wanting to exit through outlet openings 9. As soon as the pressure build up by the pump has reached a predetermined level, the blocking means is removed, for example by reversing force A, and the outlet openings are opened so that coffee extract can flow out of the chamber and into the cup as explained above, as shown in Figure 1d.

This blocking of the extraction chamber is preferably done at its outlet openings as shown, but it would as well be possible to arrange blocking means in flow direction nearer to the final outlet above the cup.

The blocking of the extraction chamber enhances extraction pressure therein, which improves the perceived coffee extract quality.

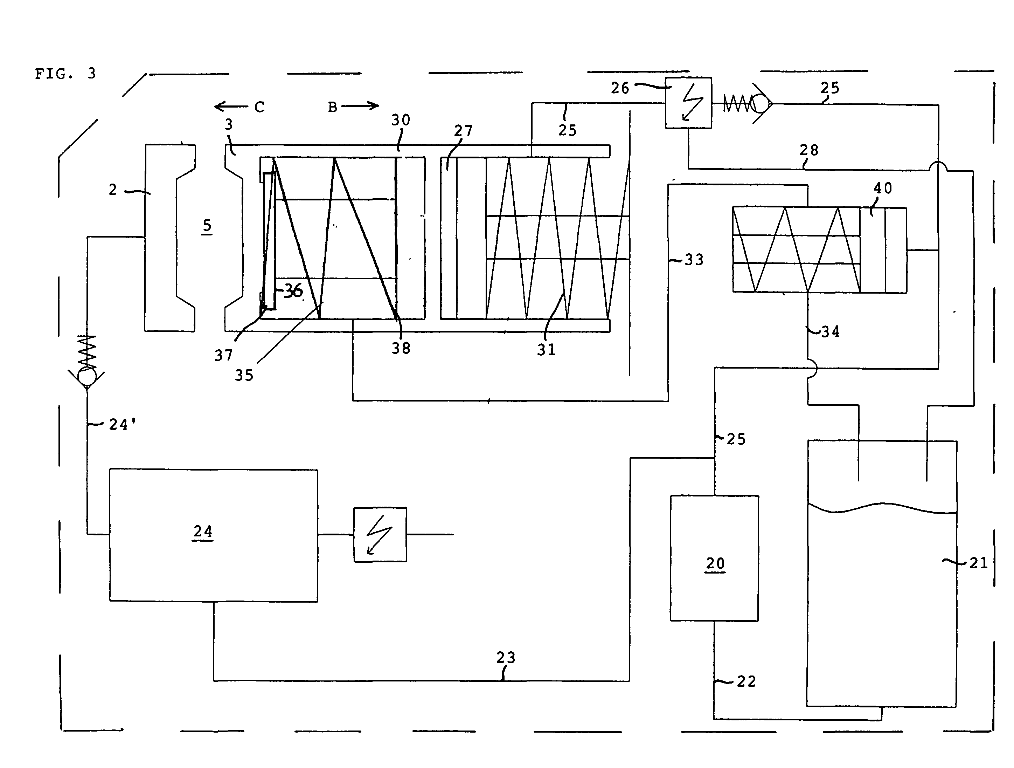

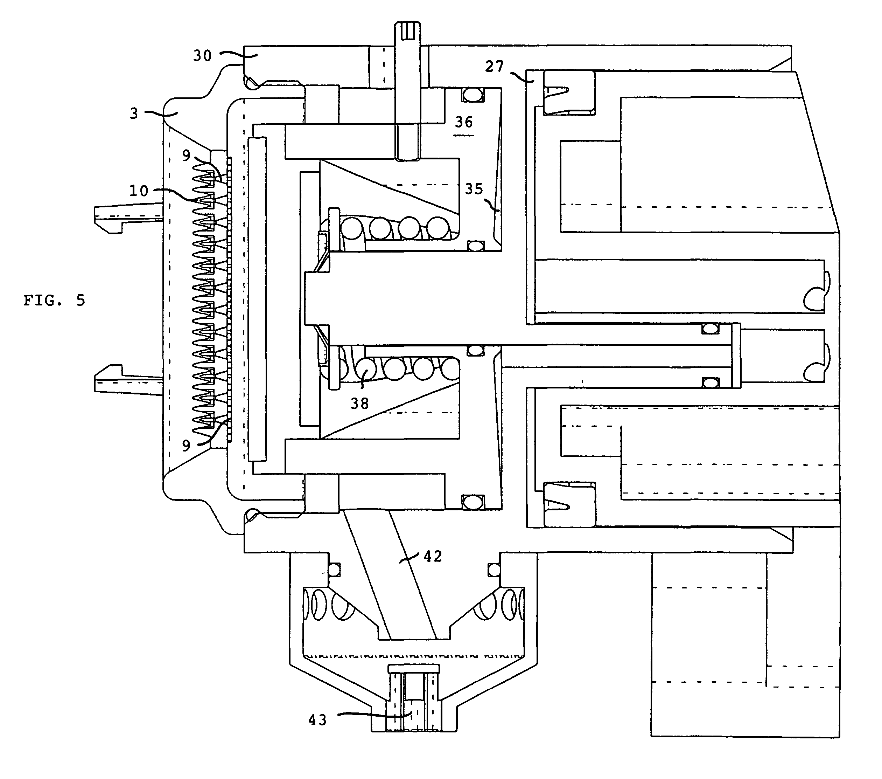

With reference to Figures 3 and 5 the coffee machine and coffee extracting system and method are now explained more in detail. Figure 3 shows schematically the hydraulic circuit of a coffee machine according to an embodiment of the invention. The chamber 5 is shown in open state and in this schematic view without the elements 10 and the openings for water and extract. Parts 2 and 3 are shown and part 2 is fixed whereas part 3 is movable along directions B and C to open and close the chamber 5. A pump 20 sucks water from a tank 21 by conduit 22. The pump feeds water through conduit 23 to an electric heating element from which the water is fed via conduit 25 to the openings in wall 2 (not shown) into chamber 5 when it is in closed state. The pump feeds water on the other hand via line 25 and an electrically controlled valve 26 into a chamber 27. Valve 26 is at this time operated to let water pass by line 25 but no water passes through line 28, which can lead water back to the tank 21. When water under pressure enters chamber 27, the extraction unit 30, which bears at its one end the part 3 of the chamber 5 is moved in direction C to close the chamber 5 into which a container 1 (not shown) has been inserted beforehand. Accordingly, this container is enclosed in the chamber 5. The closing of the chamber 5 is provided by the water pressure in chamber 27 against the force of spring 31 (only schematically shown), so that this spring is compressed by the closing movement of extraction unit 30. Line 25 feeds as well the pressure sensitive switch valve 40 which at a pressure below a predetermined level directs water via line 33 to a chamber 35 while line 34 leading water back to the tank 21 remains closed. By the water pressure in chamber 35 a piston 36 with the blocking plate 37 adapted to block the outlet openings 9 (not shown) in part 3 is moved forward in direction C in addition to the movement of the whole unit 30, so that the outlet openings are blocked. This movement of piston 36 acts against spring 38 (shown only schematically).

Accordingly, when the pump starts working and the water flow is enabled as described, the chamber 5 closes and the outlet openings thereof are closed. Meanwhile water is heated in heating element 24 and is then, after the closing of chamber and openings, fed to the chamber 5 by a controllable valve.

Pressure in the lines and in chamber 5 raises. As soon as the pressure reaches a level that corresponds to the predetermined switch valve 40 pressure level, this valve 40 deconnects line 33 from line 25 and connects line 33 with line 34, so that the water in chamber 35 will flow back into tank 21 thereby allowing piston 36 with blocking surface 37 to move back by spring force of spring 38 in direction B, thereby opening outlet openings 9 (not shown) which allows the flow of coffee extract from chamber 5 (still closed) into a collecting conduit (not shown) and into the cup. When the predetermined amount of water has thus flown through chamber 5 and the container, further water flow is stopped by stopping the pump to avoid overfilling of the cup. Since the extraction is now complete, the valve 26 is controlled to connect line 25 to line 28, so that water from chamber 27 flows back into tank 21 which allows spring 31 to press back the extraction 30 unit in direction B which opens chamber 5 so that the container can be removed and disposed. The machine is then ready for a new extraction cycle as described.

The pressure sensitive valve 40 is preferably a valve employing a piston fed by water under pump pressure, which piston is displaced by the water pressure against a spring. During a first travel period the piston allows connection of lines 25 and 33 and when a certain displacement is reached (depending on the water pressure) lines 33 and 34 are connected as explained.

Figure 5 shows a more detailed sectional view through parts of Figure 3 wherein same reference numerals designate same elements. In particular lower part 3 of the extraction chamber 5 is shown with the extraction elements, which can be moved by pressure in chamber 27. As well chamber 35 for moving piston 36 with blocking surface 37 is shown. The collection means 42 lead the coffee extract towards spout 43 from where the extract is delivered to the cup.

## Claims

1. A coffee extraction system comprising a coffee machine and at least partly water permeable containers containing a dose of ground coffee, wherein the coffee machine is adapted to enclose a container by an extraction chamber **characterised in that** it is further adapted to pierce the container while enclosing it and to provide extraction channels reaching into the container.

2. A coffee extraction system according to claim 1 wherein the extraction chamber forms a water-thight enclosure around said container except for said extraction channels and water feeding means for feeding water into said container.

3. A coffee extraction system according to claim 1 wherein the containers have walls made of filter paper.

4. A coffee extraction system according to one of claims 1 to 3, wherein the coffee machine comprises water heating means, a pump, a coffee extract outlet and the extraction chamber (5) being adapted for taking up the container in an open inserting state of the chamber and enclosing it in a closed extraction state of the chamber, the extraction chamber being connected on the one hand to the heating means and the pump so that hot water under pressure can enter the extraction chamber through openings (8) in a first wall (2) thereof, said extraction chamber being connected on the other hand to the coffee extract outlet by openings (9) in a second chamber wall (3), and wherein several extraction elements are provided that reach in closed extraction state of the chamber into the chamber such that a container is pierced by the elements and the extraction channels are provided reaching on the one hand into the container space of the extraction chamber and being connected on the other hand to the openings of the second wall.

5. A coffee extraction system according to claim 4 wherein the extraction elements form part of the second chamber wall or wherein the extraction elements are separate, movable elements.

6. A coffee extraction system according to claim 4, wherein the extraction elements each form two or more channels being in connection with one or more of the openings.

7. A coffee extraction system according to any of claims 1 to 6 wherein the extraction channels further comprise grooves in the second chamber wall surface adjacent the elements.

8. A coffee extraction system according to any of claims 1 to 7, wherein the openings in the second chamber wall are nozzle-shaped.

9. A coffee extraction system according to any of claims 1 to 8 wherein the extraction chamber is closed and preferably the extraction elements are introduced into the container by a first water pressure operatable piston.

10. A coffee extraction system according to claim 1, **characterized by** controllable blocking means for preventing coffee extract flow from the extraction chamber or the coffee extract outlet until a predetermined water pressure has been reached in the coffee machine.

11. A coffee extraction system according to claim 10 wherein said blocking means blocks the outlet of the openings in the second chamber wall.

12. A coffee extraction system according to claim 10 or 11 wherein the blocking means are controlled by a second water operatable piston.

13. A coffee extraction system according to claim 12 wherein the second piston is controlled by a pressure sensitive valve relieving water pressure from the second piston when a predetermined pump pressure has been reached.

14. A method for producing coffee extract from an at least partly water permeable container containing pre-dosed ground coffee using a coffee extraction system according to claim 1 wherein the container is pierced in an extraction chamber surrounding the container by elements reaching into the container and providing extraction channels.

15. A method for producing coffee extract according to claim 14, wherein the outlet of coffee extract from the chamber is blocked by a controllable blocking means until the water pressure in the extraction chamber has reached a predetermined level.

## Patentansprüche

1. Ein Kaffeeextraktionssystem aufweisend eine Kaffeemaschine und zumindest teilweise wasserdurchlässige Behälter beinhaltend eine Portion gemahlenen Kaffees, wobei die Kaffeemaschine angepasst ist einen Behälter mittels einer Extraktionskammer einzuschliessen, **dadurch gekennzeichnet, dass** sie ferner dazu angepasst ist den Behälter, während sie ihn einschliesst, anzustechen und Extraktionskanäle zu schaffen, welche in den Behälter reichen.

2. Ein Kaffeeextraktionssystem gemäss Anspruch 1, wobei die Extraktionskammer eine wasserdichte Umschliessung um besagten Behälter bildet, ausgenommen von besagten Extraktionskanälen und Wasserzuführmitteln zum Zufuhren von Wasser in besagten Behälter.

3. Ein Kaffeeextraktionssystem gemass Anspruch 1, wobei die Behälter Wände haben, welche aus Filterpapier hergestellt sind.

4. Ein Kaffeeextraktionssystem gemäss einem der Ansprüche 1 bis 3, wobei die Kaffeemaschine ein Wasserheizmittel, eine Pumpe, einen Kaffeeextraktauslass und die Extraktionskammer (5) aufweist, welche angepasst ist in einem offenen Hineinsetzzustand der Kammer den Behälter aufzunehmen und ihn in einem geschlossenen Extraktionszustand der Kammer einzuschliessen, wobei einerseits die Extraktionskammer am Heizmittel und an der Pumpe angeschlossen ist, so dass heisses Wasser unter Druck durch Öffnungen (8) in einer ersten Wand (2) der Extraktionskammer in diese eintreten kann, und andererseits besagte Extraktionskammer über Öffnungen (9) in einer zweiten Kammerwand (3) am Kaffeeextraktauslass angeschlossen ist, und wobei mehrere Extraktionselemente vorgesehen sind, welche in geschlossenem Extraktionszustand der Kammer in die Kammer hineinreichen, so dass ein Behälter von den Elementen angestochen wird und die Extraktionskanäle hergestellt werden, welche einerseits in den Behalterraum gestellt werden, welche einerseits in den Behalterraum der Extraktionskammer hineinreichen und andererseits mit den Öffnungen der zweiten Wand verbunden sind.

5. Ein Kaffeeextraktionssystem gemäss Anspruch 4, wobei die Extraktionselemente einen Teil der zweiten Kammerwand bilden oder wobei die Extraktionselemente separate, bewegliche Elemente sind.

6. Ein Kaffeeextraktionssystem gemäss Anspruch 4, wobei die Extraktionselemente jedes zwei oder mehr Kanäle bilden, welche mit einer oder mehr der Öffnungen in Verbindung sind.

7. Ein Kaffeeextraktionssystem gemäss einem der Ansprüche 1 bis 6, wobei die Extraktionskanäle ferner im Anschluss an die Elemente Riefen in der Oberflache der zweiten Kammerwand aufweisen.

8. Ein Kaffeeextraktionssystem gemass einem der Ansprüche 1 bis 7, wobei die Öffnungen in der zweiten Kammerwand die Form von Düsen haben.

9. Ein Kaffeeextraktionssystem gemäss einem der Ansprüche 1 bis 8, wobei die Extraktionskammer geschlossen ist und vorzugsweise die Extraktionselemente mittels eines ersten mit Wasserdruck betätigbaren Kolbens in den in den Behälter eingeführt werden.

10. Ein Kaffeeextraktionssystem gemäss Anspruch 1, **gekennzeichnet durch** ein steuerbares Sperrmittel zum Verhindern eines Kaffeeextraktflusses aus der Extraktionskammer oder dem Kaffeeextraktauslass bis ein vorbestimmter Wasserdruck in der Kaffeemaschine erreicht wurde.

11. Ein Kaffeeextraktionssystem gemäss Anspruch 10, wobei besagtes Sperrmittel den Auslass der Öffnungen in der zweiten Kammerwand blockiert.

12. Ein Kaffeeextraktionssystem gemäss Anspruch 10 oder 11, wobei das Sperrmittel von einem zweiten mit Wasser betätigbaren Kolben gesteuert ist.

13. Ein Kaffeeextraktionssystem gemass Anspruch 12, wobei der zweite Kolben mittels eines druckempfindlichen Ventils gesteuert wird, welches den Wasserdruck vom zweiten Kolben nimmt, sobald ein vorbestimmter Pumpendruck erreicht ist.

14. Ein Verfahren zum Herstellen von Kaffeeextrakt aus einem zumindest teilweise wasserdurchlässigen Behälter, welcher vorportionierten gemahlenen Kaffee enthält, mittels Benutzung eines Kaffeeextraktionssystems gemäss Anspruch 1, wobei der Behälter in einer den Behälter umgebenden Extraktionskammer von Elementen angestochen wird, welche in den Behälter hineinreichen und Extraktionskanäle bilden.

15. Ein Verfahren zum Herstellen von Kaffeeextrakt gemäss Anspruch 14, wobei der Auslass von Kaffeeextrakt aus der Kammer mittels eines steuerbaren Sperrmittels gesperrt ist bis der Wasserdruck in der Extraktionskammer ein vorbestimmtes Niveau erreicht hat.

## Revendications

1. Système d'extraction de café comprenant une machine à café et des réceptacles au moins partiellement perméables à l'eau contenant une dose de café moulu, dans lequel la machine à café est conçue pour renfermer un réceptacle par une chambre d'extraction, **caractérisé en ce qu'**elle est en outre conçue pour transpercer le réceptacle tout en le renfermant et pour fournir des canaux d'extraction atteignant l'intérieur du réceptacle.

2. Système d'extraction de café selon la revendication 1, dans lequel la chambre d'extraction forme une enceinte étanche à l'eau autour dudit réceptacle à l'exception desdits canaux d'extraction et d'un moyen d'alimentation en eau destiné à fournir de l'eau audit réceptacle.

3. Système d'extraction de café selon la revendication 1, dans lequel les réceptacles ont des parois en papier-filtre.

4. Système d'extraction de café selon l'une des revendications 1 à 3, dans lequel la machine à café comprend un moyen de chauffage de l'eau, une pompe, une sortie d'extrait de café, et la chambre d'extraction (5) étant conçue pour faire monter le réceptacle dans un état d'insertion ouvert de la chambre et le renfermer dans un état d'extraction fermé de la chambre, la chambre d'extraction étant reliée d'une part au moyen de chauffage et à la pompe de façon à ce que de l'eau chaude sous pression puisse entrer dans la chambre d'extraction par l'intermédiaire d'ouvertures (8) dans une première paroi (2) de celle-ci, ladite chambre d'extraction étant reliée d'autre part à la sortie de l'extrait de café par des ouvertures (9) dans une seconde paroi de la chambre (3), et dans lequel plusieurs éléments d'extraction sont prévus pour atteindre dans un état d'extraction fermé de la chambre l'intérieur de la chambre de sorte qu'un réceptacle soit transpercé par les éléments, et les canaux d'extraction sont prévus pour atteindre d'une part l'intérieur de l'espace du réceptacle de la chambre d'extraction et étant reliés d'autre part aux ouvertures de la seconde paroi.

5. Système d'extraction de café selon la revendication 4, dans lequel les éléments d'extraction font partie de la seconde paroi de la chambre ou dans lequel les éléments d'extraction sont des éléments distincts mobiles.

6. Système d'extraction de café selon la revendication 4, dans lequel les éléments d'extraction forment chacun deux ou plusieurs canaux en liaison avec une ou plusieurs des ouvertures.

7. Système d'extraction de café selon l'une quelconque des revendications 1 à 6, dans lequel les canaux d'extraction comprennent en outre des rainures dans la surface de la seconde paroi de la chambre adjacentes aux éléments.

8. Système d'extraction de café selon l'une quelconque des revendications 1 à 7, dans lequel les ouvertures dans la seconde paroi de la chambre sont en forme de buses.

9. Système d'extraction de café selon l'une quelconque des revendications 1 à 8, dans lequel la chambre d'extraction est fermée et de préférence les éléments d'extraction sont introduits dans le réceptacle par un premier piston pouvant être manoeuvré par la pression d'eau.

10. Système d'extraction de café selon la revendication 1, **caractérisé par** un moyen de blocage pouvant être commandé pour empêcher la circulation de l'extrait de café depuis la chambre d'extraction ou depuis la sortie de l'extrait de café jusqu'à ce qu'une pression d'eau déterminé à l'avance ait été atteinte dans la machine à café.

11. Système d'extraction de café selon la revendication 10, dans lequel ledit moyen de blocage bloque la sortie des ouvertures dans la seconde paroi de la chambre.

12. Système d'extraction de café selon la revendication 10 ou 11, dans lequel le moyen de blocage est commandé par un second piston pouvant être manoeuvré par de l'eau.

13. Système d'extraction de café selon la revendication 12, dans lequel le second piston est commandé par une vanne sensible à la pression réduisant la pression d'eau depuis le second piston lorsqu'une pression déterminé à l'avance de la pompe a été atteinte.

14. Procédé destiné à fournir un extrait de café à partir d'un réceptacle au moins partiellement perméable à l'eau contenant du café moulu dosé à l'avance, utilisant un système d'extraction de café selon la revendication 1, dans lequel le réceptacle est transpercé dans une chambre d'extraction entourant le réceptacle par des éléments atteignant l'intérieur du réceptacle et fournissant des canaux d'extraction.

15. Procédé pour produire de l'extrait de café selon la revendication 14, dans lequel la sortie de l'extrait de café de la chambre est bloquée par un moyen de blocage pouvant être commandé jusqu'à ce que la pression d'eau dans la chambre d'extraction ait atteint un niveau déterminé à l'avance.
